# EUROPÄISCHE PATENTSCHRIFT

(11) **EP 3 111 085 B1**
(45) Veröffentlichungstag und Bekanntmachung des Hinweises auf die Patenterteilung: **10.05.2017**
(21) Anmeldenummer: 15705839.7
(22) Anmeldetag: 24.02.2015
(51) Int. Cl.: F03G 3/08, B64G 1/28

(54) **ANTRIEBSANORDNUNG**
DRIVE ARRANGEMENT
ARRANGEMENT D'ENTRAÎNEMENT

(30) Priorität: 27.02.2014 DE 102014102557
(43) Veröffentlichungstag der Anmeldung: 04.01.2017
(73) Patentinhaber: Innovative Motion GmbH, 13599 Berlin (DE)
(72) Erfinder: LEBERER, Thomas, 13599 Berlin (DE)
(74) Vertreter: Weisse, Renate
(86) Internationale Anmeldenummer: PCT/EP2015/053834
(87) Internationale Veröffentlichungsnummer: WO 2015/128324

(56) Entgegenhaltungen:
- WO-A1-91/02155
- US-A1- 2003 234 318
- US-A1- 2004 216 538
- US-A1- 2011 156 396
- US-A1- 2011 219 893

## Beschreibung

### Technisches Gebiet

Die Erfindung betrifft eine Antriebsanordnung. Antriebsanordnungen dienen dazu einen Gegenstand in Bewegung zu versetzen. Beispielsweise kann ein Körper zu einer linearen, einer Rotationsbewegung oder einer Kombination daraus angeregt werden. Es gibt die verschiedensten Gründe, einen Körper zu bewegen. Maschinen und Fahrzeuge werden angetrieben um ihre Funktion zu erfüllen. Aktuatoren werden angetrieben um einen Körper auszurichten. Bei jeder Kraft, die von einem Antrieb erzeugt wird, wird entsprechend dem Gesetz der Impulserhaltung eine Gegenkraft in entgegengesetzter Richtung erzeugt. Der Körper muss sich quasi irgendwo "abstoßen". Drehbewegungen werden von einem Drehimpuls ausgelöst, der mit einen Drehimpuls in entgegengesetzter Richtung einhergeht.

Es gibt Orte, beispielsweise im Weltraum oder in Fluiden geringer Dichte, an denen es schwierig ist, einen Körper zur Fortbewegung zu bringen. Es gibt ferner Situationen, an denen eine Gegenkraft außerhalb des bewegten Körpers unerwünscht ist.

### Stand der Technik

Unter dem Begriff "Reaktionsrad" wird ein Aktor zur Lageregelung von Satelliten verstanden. Das Reaktionsrad bringt mittels eines Motors ein Drehmoment auf, um den Satelliten in der gleichen Achse, aber in Gegenrichtung zu drehen. Der Gesamtdrehimpuls des Systems Satellit bleibt dabei konstant. Der auf den Satellit übertragene Drehimpuls wird von dem Reaktionsrad in entgegengesetzter Richtung aufgenommen. DE 938571 B offenbart einen angetriebenen Kurskreisel zur Steuerung von Fahrzeugen, insbesondere Flugzeugen. DE 418559 A offenbart ein Getriebe zur Kraftübertragung mittels Kreiselsystem. DE 1 506 648 A offenbart einen aktiven lage- und bahnstabilisierten Nachrichtensatelliten. DE 16 50 795 offenbart ein Massetriebwerk mit beweglichen Massekörpern.

Es sind Gyroskope bekannt, mit denen Körper beispielsweise im Weltraum, in ihrer Lage stabilisiert werden. Diese dienen jedoch nicht dem Antrieb zur Fortbewegung eines Körpers, sondern lediglich der Messung und Stabilisierung seiner Lage im Raum. DE 694 28 531 T2 offenbart ein Doppelkardanisches Momentumregelungsgyroskop mit hohem Drehmoment.

US 2011/0219893 A1 offenbart eine Vorrichtung, welche die Präzession verwendet um ein Objekt vorwärts und rückwärts oder hoch und runter entlang eines Kreisbogens zu bewegen. Die Vorrichtung hat zwei identische, bewegliche Elemente, die simultan um zwei separate orthogonale Achsen mit einem gemeinsamen Drehpunkt rotieren.

### Offenbarung der Erfindung

Es ist Aufgabe der Erfindung, einen Antrieb ohne äußere Gegenkraft zu schaffen. Erfindungsgemäß wird die Aufgabe mit einer Antriebsanordnung gelöst, enthaltend:
(a) eine um eine erste Achse drehbeweglich gelagerte Rotationsmasse;
(b) einen um eine zweite, senkrecht zur ersten Achse verlaufende Achse drehbeweglich gelagertes Lagerelement mit einem Lager zum Lagern der Rotationsmasse,
(c) einen um eine dritte, senkrecht zur zweiten Achse drehbeweglich gelagerten Schwingkörper mit einem Lager zum Lagern des Lagerelements,
(d) einen an dem Schwingkörper vorgesehenen Antrieb zum Erzeugen einer Drehbewegung des Lagerelements um die zweite Achse,
(e) ein Gehäuse mit einem Lager zum Lagern des Schwingkörpers, und
(f) eine gehäusefeste Bremse zum Abbremsen der Drehbewegung des Schwingkörpers, derart, dass bei jedem Bremsvorgang eine Antriebskraft auf das Gehäuse übertragen wird.

Die erfindungsgemäße Antriebsanordnung umfasst zwei um senkrechte Achsen rotierende Körper - den Rotationskörper und den darum angeordnetes Lagerelement. Dadurch wird über die Lagerung im Schwingkörper eine Corioliskraft auf den Schwingkörper ausgeübt.

Die Corioliskraft tritt allgemein in rotierenden Systemen auf, wenn eine Masse innerhalb des rotierenden Systems nicht ruht, sondern sich relativ zum System bewegt. Die Richtung der Corioliskraft ist senkrecht sowohl zur Bewegungsrichtung des Körpers als auch zur Rotationsachse des Bezugssystems. Die Corioliskraft ist im vorliegenden Fall je nach Winkellage der Rotationsmasse in entgegengesetzte Richtungen ausgerichtet. Der Schwingkörper schwingt daher wie ein Pendel um die dritte Achse.

Die vorliegende Erfindung sieht vor, dass die Schwingung des Schwingkörpers phasenweise von einer gehäusefesten Bremse abgebremst wird. Bei jedem Bremsvorgang wird eine Kraft auf das Gehäuse übertragen, durch welche das Gehäuse in Rotation versetzt wird. Je nach Phasenlage und Dauer des Bremsvorgangs kann so eine Gehäusedrehung in einer Richtung hervorgerufen werden. Dabei ist keine nach außen wirkende Gegenkraft erforderlich.

Vorzugsweise ist vorgesehen, dass die Rotationsmasse, das Lagerelement und/oder der Schwingkörper mit einer Welle verbunden sind, die sich entlang der zugehörigen Rotationsachse erstreckt und drehbeweglich gelagert ist. Die Verwendung einer Welle im Achsbereich ermöglicht einen einfachen Aufbau und eine gute Lagerung. Es versteht sich aber, dass der rotierende Körper auch auf andere Weise drehbeweglich gelagert werden kann.

Der Antrieb zum Erzeugen einer Drehbewegung des Lagerelements um die zweite Achse kann der Antrieb zum Erzeugen einer Drehbewegung des Lagerelements um die zweite Achse umfassen:
(a) ein außenverzahntes Zahnrad, welches das Lagerelement an einer Außenverzahnung antreibt;
(b) eine Turbine oder Schaufeln, die mit einem unter Druck stehenden Fluid angetrieben werden; oder
(c) einen Elektromotor mit Magneten und Spulen.

Das außenverzahnte Zahnrad kann von einem Elektromotor oder einem Treibstoffmotor angetrieben werden. Ein Fluidantrieb kann beispielsweise mit Druckluft oder mit einem Wasserstrahl verwirklicht werden. Es versteht sich, dass auch jeder andere Antrieb geeignet ist, mit dem das Lagerelement zur Rotation um die zweite Achse angetrieben werden kann.

Bei einer vorteilhaften Ausgestaltung der Erfindung ist vorgesehen, dass der Schwingkörper einen Schwingkörperring umfasst, der fest mit einer ringförmigen Bremsscheibe verbunden ist, wobei die Bremse an der Bremsscheibe angreift. Dabei kann der Schwingkörperring in einer Ebene liegen, die senkrecht zur Ebene der Bremsscheibe verläuft. Der Schwingkörper erstreckt sich also außen um das Lagerelement herum. Das Lagerelement rotiert innerhalb des Schwingkörpers. Der Antrieb kann an dem Schwingkörperring vorgesehen sein. Die Bremse wirkt hingegen auf die Bremsscheibe.

Das Gehäuse kann beispielsweise eine offene Kugel oder einen Zylinder bilden. Es ist aber auch jede andere Geometrie denkbar, in der eine Bremse im Bereich der Bremsscheibe angeordnet ist. Mit dem Gehäuse kann der anzutreibende Körper verbunden sein oder das Gehäuse ist selber der anzutreibende Körper.

Bei einer bevorzugten Ausgestaltung der Erfindung ist die Bremse von einer Wirbelstrombremse oder zwei Bremsklötzen auf der Innenseite des Gehäuses gebildet, welche den Schwingkörper zu ausgewählten Phasen abbremsen, wobei ein Drehimpuls auf das Gehäuse übertragen wird. Es ist aber auch denkbar, andere Effekte als Reibung zum Bremsen einzusetzen. Die vorliegende Erfindung ist daher nicht auf die Art der Bremse beschränkt. Der Zeitpunkt und die Dauer des Bremsvorgangs bestimmen die Bewegung des Gehäuses. Es ist daher vorteilhaft, wenn die Bremsaktivität der Bremse hinsichtlich Dauer und/oder Stärke steuerbar ist. Dadurch wird die Bewegung an die Anwendung angepasst.

Zur Bestimmung des Bremszeitraums und der Steuerung des Antriebs ist wenigstens ein Sensor an einer der Achsen, vorzugsweise an beiden Achsen vorgesehen. Jeder der Sensoren liefert ein Signal, welches die Winkellage des rotierenden Elements, d.h. des Lagerelements und/oder des Schwingkörpers repräsentiert. Sie Signale jedes Sensors wird an die Steuerung der Bremse übertragen. Der Bremszeitraum wird dan an die Anwendung nach Maßgabe der Signale angepasst. In ähnlicher Weise können Sensoren zur Kraftmessung der erzeugten Corioliskräfte vorgesehen sein. Die Signale dieser Sensoren können an die Motorsteuerung übertragen werden. Die Motoren werden nach Maßgabe dieser Signale geregelt.

Bei einer Ausgestaltung der Erfindung ist ein Motor zum Antreiben der Rotationsmasse vorgesehen, der über Schleifkontakte mit Energie versorgt wird.

Die beschriebene Antriebsanordnung eignet sich für die Verwendung zum Antrieb eines Transportmittels für Personen und/oder Güter, im Automotive-Bereich, in der Luft- und Raumfahrt, im nautischen Bereich und/oder für Tiefseeanwendungen. Besonders geeignet sind Verwendungen, die für andere Antriebe nicht oder nur mit Aufwand zugänglich sind. Es versteht sich aber, dass die beschriebene Anordnung auch in jeder anderen Verwendung genutzt werden kann.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine perspektivische Darstellung einer Rotationsmasse, die von einem Motor angetrieben wird.
- Fig.2: ist eine perspektivische Darstellung eines Lagerelements in Form eines Käfigs, in dem die Rotationsmasse aus Figur 1 rotiert.
- Fig.3: zeigt das Lagerelement aus Figur 2 ohne Rotationsmasse.
- Fig.4: ist eine perspektivische Darstellung eines Schwingkörpers mit darin drehbar gelagertem Lagerelement.
- Fig.5: zeigt den Schwingkörperring des Schwingkörpers aus Figur 4 ohne Bremsscheibe im Detail.

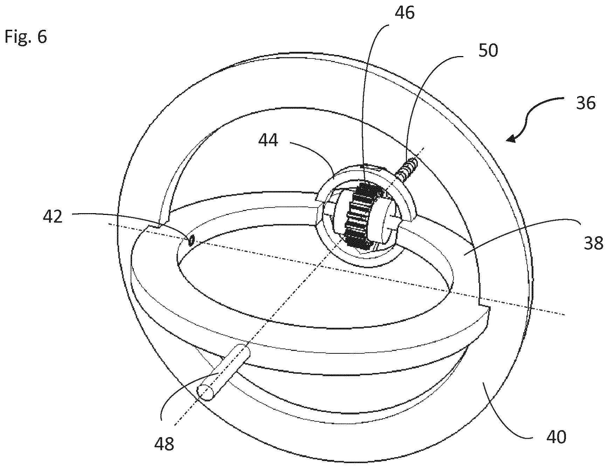

- Fig.6: zeigt den Schwingkörperring aus Figur 5 mit Bremsscheibe im Detail.
- Fig.7: ist eine perspektivische Darstellung eines Gehäuses, in dem der Schwingkörper drehbar gelagert ist.
- Fig.8: zeigt das Gehäuse aus Figur 7 gesondert im Detail.
- Fig.9: illustriert die Schleifkontakte für die Energiezufuhr der Antriebsanordnung der Figuren 1 bis 8.
- Fig.10: zeigt die Energieversorgung der Antriebsanordnung aus den Figuren 1 bis 9 im Detail.
- Fig.11: ist eine perspektivische Darstellung analog zu Figur 4, wobei sich das Zahnrad in einer unterschiedlichen, zweiten Position befindet.
- Fig. 12: ist eine perspektivische Darstellung analog zu Figur 4 und 11, wobei sich das Zahnrad in einer unterschiedlichen, dritten Position befindet.
- Fig.13: ist eine perspektivische Darstellung analog zu Figur 4 und 11.
- Fig.14: zeigt die für die Rotation des Lagerelements erforderlichen Komponenten und illustriert deren Bewegung.
- Fig.15: ist ein Querschnitt durch die Anordnung aus Figur 14.
- Fig.16: zeigt die zusammengesetzte Antriebsanordnung ohne Gehäuse.
- Fig.17: zeigt die zusammengesetzte Antriebsanordnung mit Gehäuse.
- Fig.18: ist eine schematische Darstellung zur Illustration der Funktionsweise eines Antriebs für Fahrzeuge mit zwei Antriebsanordnungen
- Fig.19: ist eine perspektivische Ansicht der Anordnung aus Figur 4, 11 und 13 in einer weiteren Position zur Illustration der beweglichen Teile.
- Fig.20: ist eine perspektivische Ansicht der Anordnung aus Figur 4, 11 und 13 in einer weiteren Position zur Illustration der beweglichen Teile.

### Beschreibung des Ausführungsbeispiels

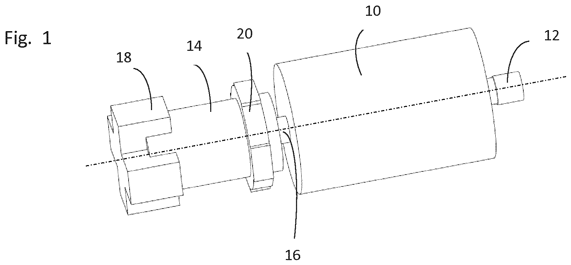

Figur 1 zeigt eine mit 10 bezeichnete Rotationsmasse. Die Rotationsmasse 10 ist im vorliegenden Ausführungsbeispiel im wesentlichen zylindrisch und rotiert mit einer Welle 12 um ihre Mittenachse. Die Rotationsbewegung wird mit einem Motor 14 erzeugt. Der Motor 14 ist zu diesem Zweck über eine Koppelung 16 mit der Rotationsmasse 10 verbunden. Der Motor 14 wird in zwei Klemmen 18 und 20 gehalten, so dass die Rotationsmasse mittig angeordnet ist.

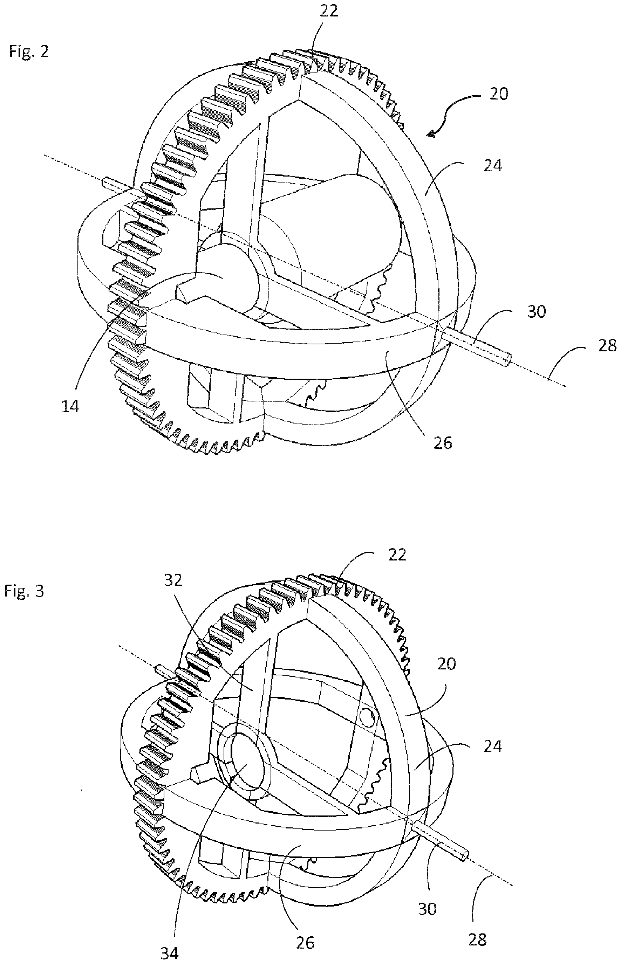

Die Rotationsmasse 10 ist in einem allgemein mit 20 bezeichneten Käfig drehbar gelagert. Dieser ist in Figur 2 dargestellt. Figur 3 zeigt den Käfig 20 ohne Rotationsmasse. Der Käfig 20 umfasst im vorliegenden Ausführungsbeispiel ein Zahnrad 22 mit Außenverzahnung. Senkrecht zur Zahnradebene ist ein erstes ringförmiges Lagerelement 24 und in der dazu senkrechten Ebene ein zweites ringförmiges Lagerelement 26 mit dem Zahnrad verbunden. Die Lagerelemente 24 und 26 sind im vorliegenden Ausführungsbeispiel kreisförmig, können aber auch eine andere Form, etwa die einer Ellipse annehmen. Der Käfig 20 ist um eine Achse 28 drehbar gelagert. Hierzu ist auf beiden Seiten eine Welle 30 entlang der Achse 28 vorgesehen. Die Achse 28 erstreckt sich senkrecht zur Zahnradebene und durch den Kreuzungspunkt der ringförmigen Lagerelemente 24 und 26.

Im Kreuzungspunkt des ringförmigen Lagerelements 26 und des Zahnrads 22 befindet sich das Lager zum Lagern der Welle 12 mit der Rotationsmasse 10. Die Rotationsmasse 10 rotiert entsprechend im vorliegenden Ausführungsbeispiel um eine Achse in der Zahnradebene. In der Ebene des Lagerelements 24 ist eine kreuzförmige Halterung 32 angeformt. Die Halterung 32 weist eine Aufnahme 34 auf. In der Aufnahme 34 wird der Motor 14 verdrehsicher befestigt. Dies ist in Figur 2 zu erkennen.

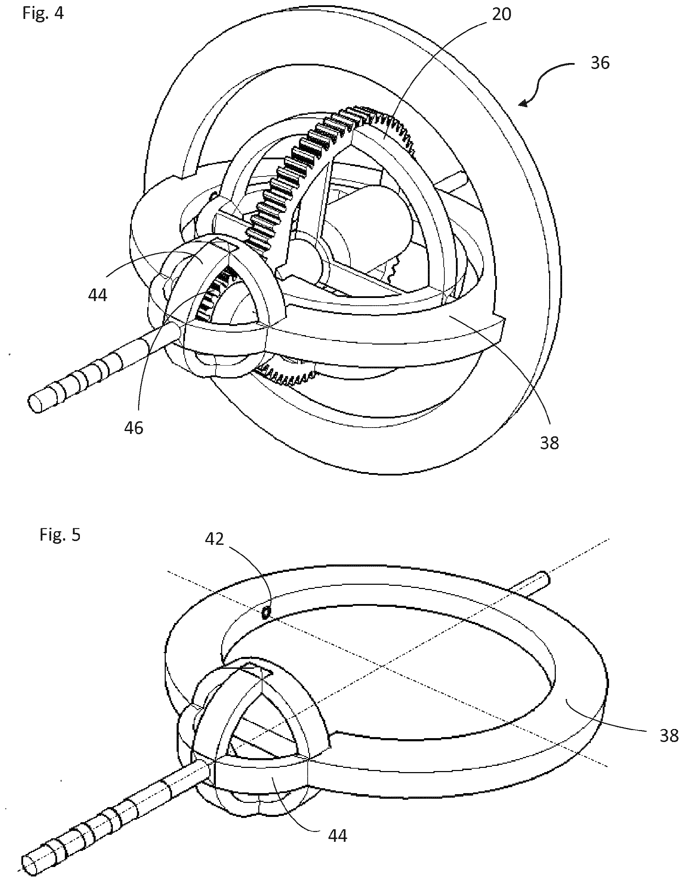

Das Lagerelement 20 ist drehbar in einem Schwingkörper gelagert, der allgemein mit 36 bezeichnet ist. Der Schwingkörper 36 umfasst ein Schwingkörperring 38. Der Schwingkörperring 38 ist in Figur 5 noch einmal gesondert dargestellt. Der Schwingkörperring 38 ist im vorliegenden Ausführungsbeispiel mit einer Bremsscheibe 40 fest verbunden. Die Bremsscheibe 40 folgt also jeder Bewegung des Schwingkörperrings 38. Die Bremsscheibe 40 ist ebenfalls ringförmig. Sie erstreckt sich in einer Ebene, die senkrecht zur Ebene des Schwingkörperrings 38 verläuft.

Der Schwingkörperring 38 weist auf der Innenseite ein Lager 42 auf. Dies ist in Figur 5 zu erkennen. Das Lager lagert die Welle 30 des Käfigs 20. Dies ist in Figur 4 dargestellt. An den Schwingkörperring 38 ist ein offenes Gehäuse 44 angeformt. In dem Gehäuse 44 ist ein Antriebszahnrad 46 drehbar gelagert. Das Antriebszahnrad 46 greift mit einer Außenverzahnung in die Außenverzahnung des Zahnrads 22. Durch Rotation des Antriebszahnrads 46 wird das Zahnrad 22 angetrieben. Es kann dann um die Achse 28 rotieren.

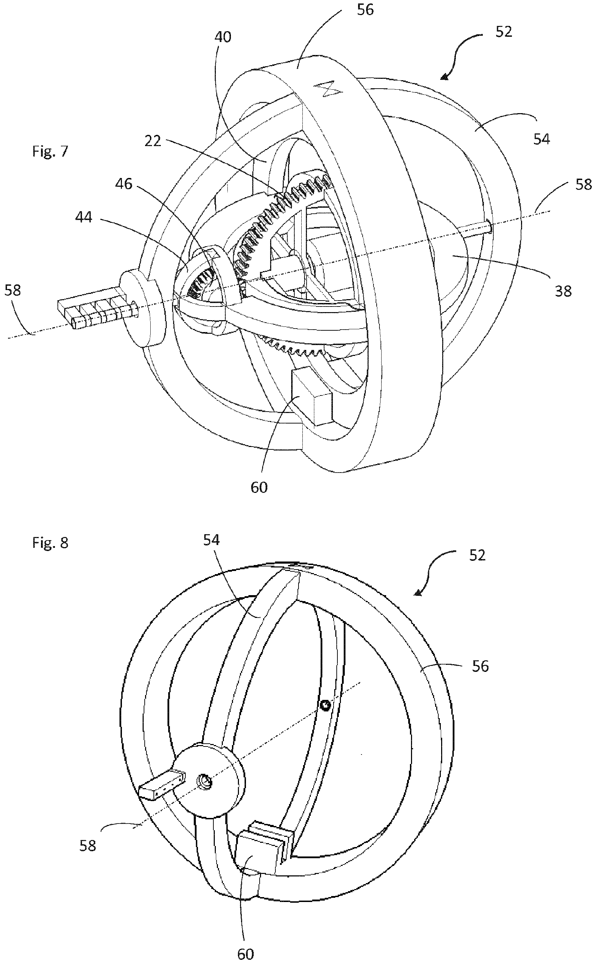

An den Schwingkörperring 38 ist eine Welle 48 und 50 angeformt. Mit der Welle 48 und 50 ist der Schwingkörper drehbar in einem Gehäuse 52 gelagert. Im vorliegenden Ausführungsbeispiel hat das Gehäuse 52 die Form einer offenen Kugel mit zwei ringförmigen Gehäuseteilen 54 und 56. Die Gehäuseteile 54 und 56 sind fest miteinander verbunden. Die Welle 48 und 50 ist in einem zugehörigen Lager im Gehäuseteil 54 gelagert. Der Schwingkörper 36 kann also um eine zugehörige dritte Achse 58 (s. Fig. 7) schwingen. Die Achse 58 verläuft immer senkrecht zur Rotationsachse des Zahnrads 22. Statt einer Kugel kann jede beliebige Gehäuseform, beispielsweise auch eine zylindrische Form verwendet werden. Das Gehäuse kann, wie im vorliegenden Ausführungsbeispiel eine offene Form haben. Es gibt aber auch Verwendungen, bei denen es sinnvoll ist, das Gehäuse vollständig geschlossen und beispielsweise gas- und/oder wasserdicht zu gestalten, so dass kein Druck- und Materialausgleich mit der Umgebung erfolgt.

Im Gehäuse 52 ist eine Bremse 60 vorgesehen. Die Bremse 60 ist auf der Innenseite des Gehäuses fest installiert. Die Bremse 60 greift um die Bremsscheibe 40 des Schwingkörpers 36. Im vorliegenden Ausführungsbeispiel ist die Bremse 60 als Wirbelstrombremse ausgebildet. Es ist aber auch jede andere Bremse, etwa mit Bremsklötzen oder dergleichen geeignet. Die Bremse 60 ist steuerbar. So kann die Bremskraft, der Bremszeitpunkt und die Bremsdauer der Bremse 60 genau eingestellt und gesteuert werden. Beim Bremsvorgang wird der Drehimpuls des schwingenden Schwingkörpers 36 auf das Gehäuse 52 übertragen. Dadurch wird eine Rotationsbewegung des Gehäuses 52 hervorgerufen. Beim Bremsen folgt das Gehäuse 52 quasi der Schwingbewegung.

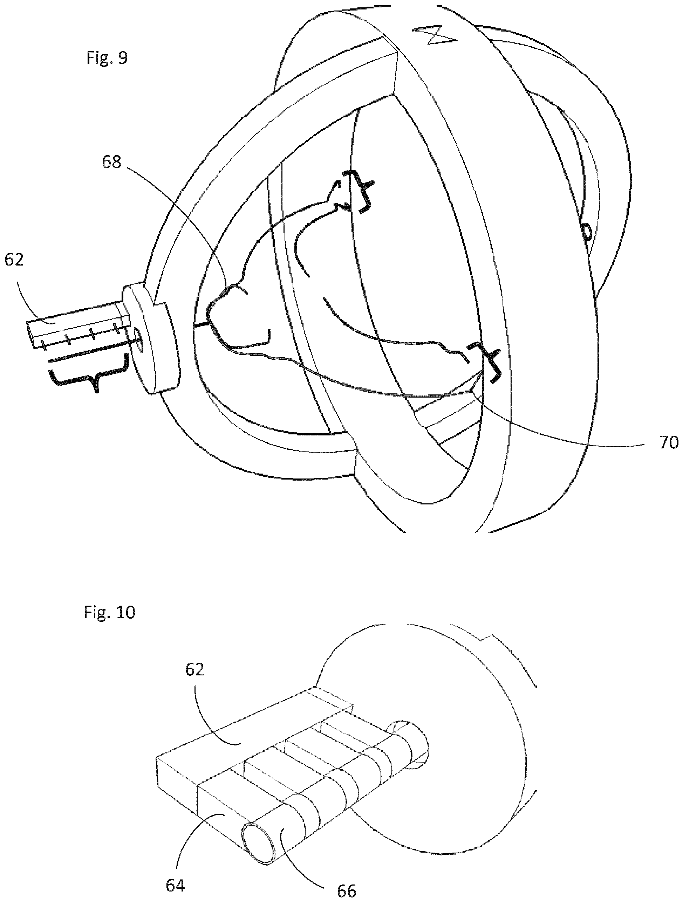

Figur 9 und 10 illustrieren die Energiezufuhr zur Erzeugung der Rotationsbewegung der Rotationsmasse 10 und des Zahnrads 22. Eine Energiequelle, im vorliegenden Ausführungsbeispiel eine Batterie 62, ist über Schleifkontakte 64 mit Schleifringen 66 kontaktiert. Die Schleifringe 64 umschließen die Welle 50. Elektrische Drähte 68 sind durch die Welle 50 geführt und versorgen den Antrieb mit dem Zahnrad 46 mit elektrischer Energie. Die mit 70 bezeichneten elektrischen Drähte versorgen ferner den Motor 14 mit elektrischer Energie.

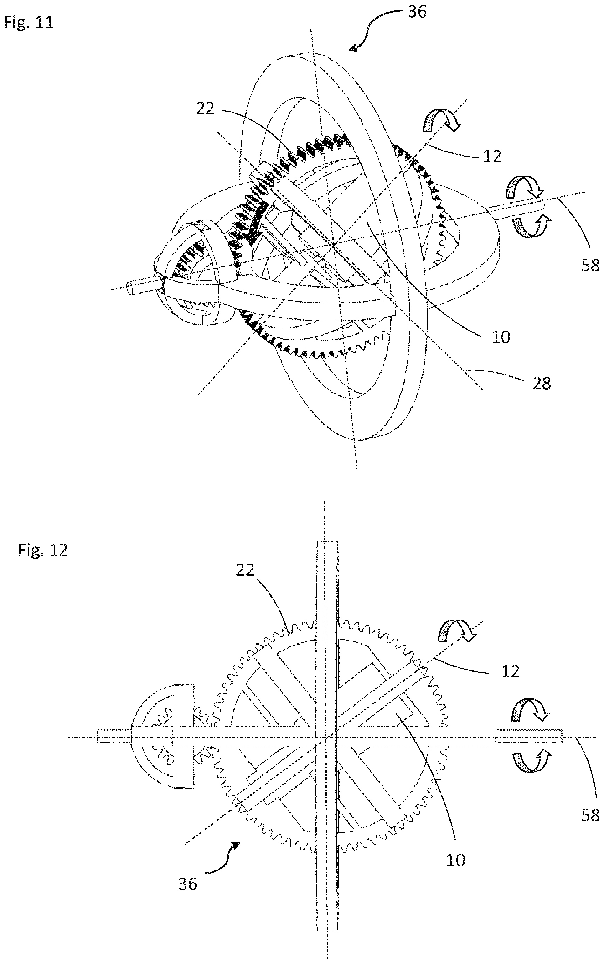

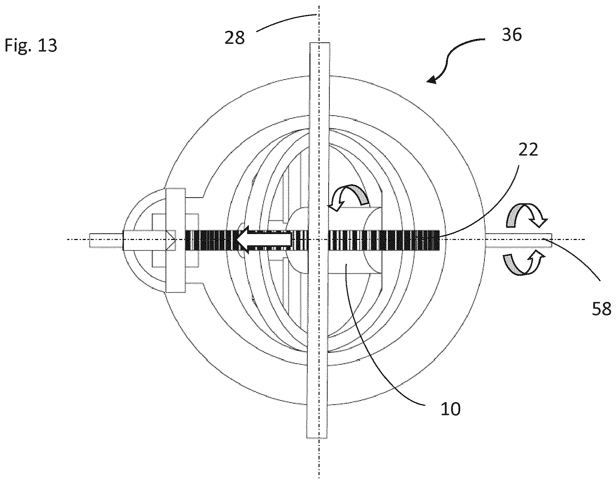

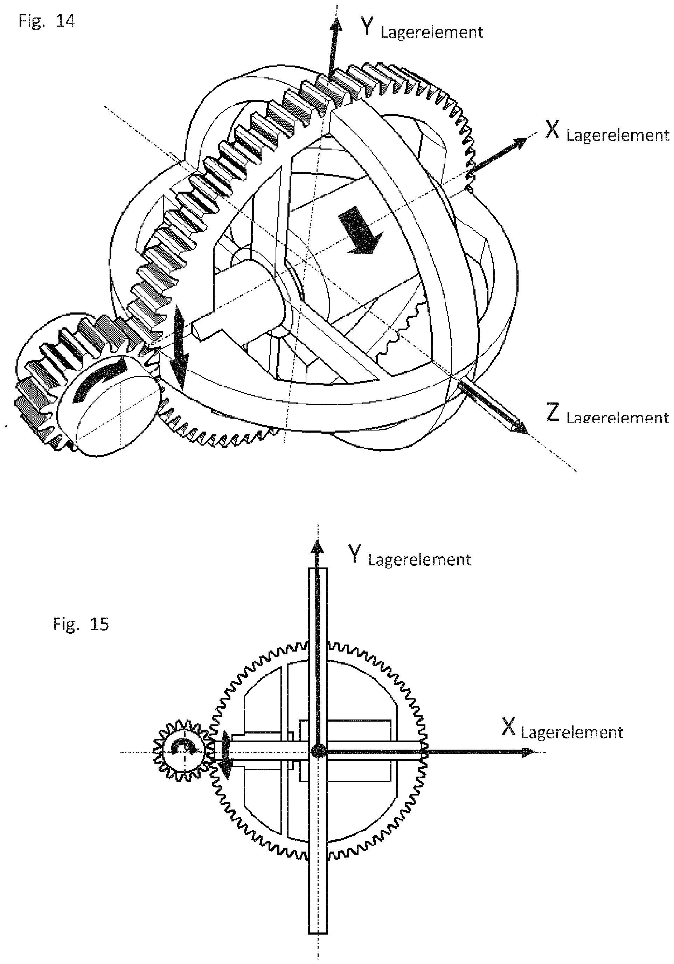

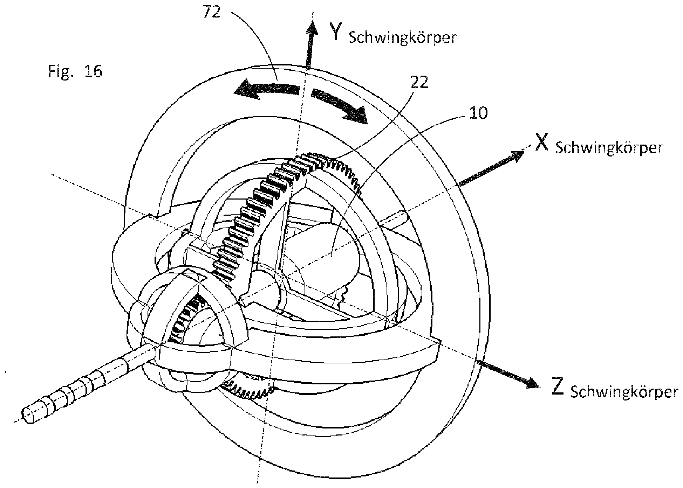

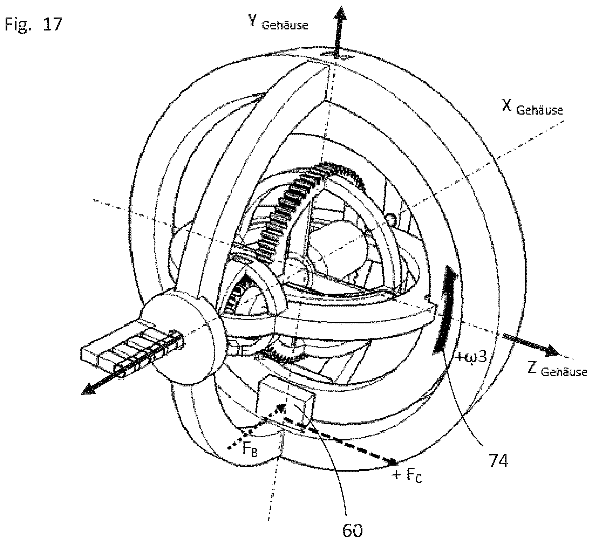

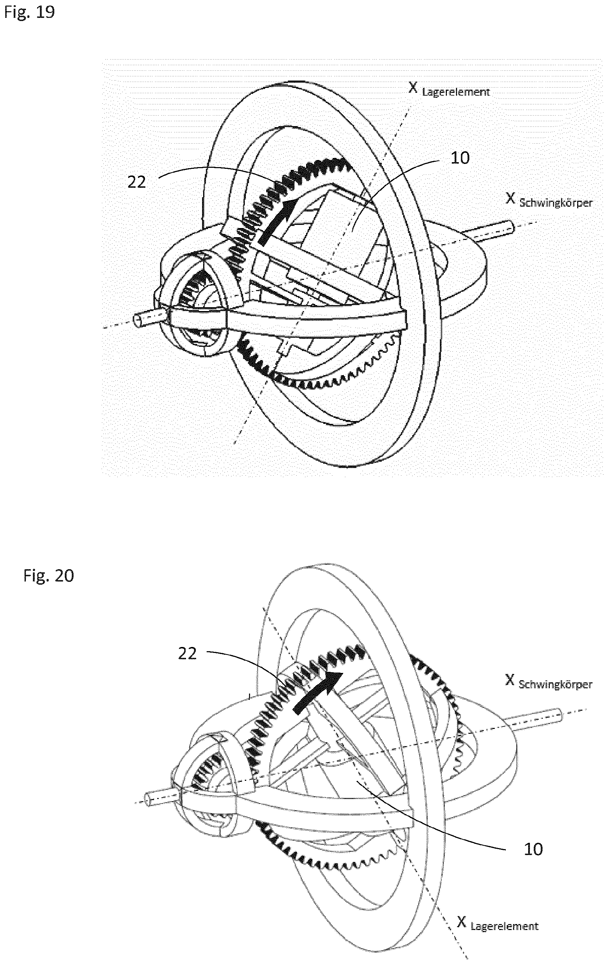

Figur 11 bis 17 illustrieren die Funktionsweise der Komponenten. Die Rotationsmasse 10 rotiert um eine erste Achse. Das Zahnrad 22 rotiert um eine zweite Achse, die senkrecht zur Rotationsachse der Rotationsmasse 10 verläuft. Durch diese Rotation wird eine Coriolis-Kraft erzeugt. Durch die Corioliskraft schwingt der Schwingkörper um eine dritte Achse, die senkrecht zur zweiten Achse verläuft. Die Schwingung ist in Figur 16 und 17 durch Pfeile 72 illustriert. Der Schwingkörper schwingt periodisch hin und her. Wenn nun die Bremse 60 immer dann aktiviert wird, wenn der Schwingkörper in einer Vorzugsrichtung schwingt, wird ein gerichteter Drehimpuls auf das Gehäuse übertragen. Dies ist durch Pfeile 74 repräsentiert. Beim Zurückschwingen kann die Bremse gelöst werden. In der Summe wird eine Drehung des Gehäuses ohne äußere Einwirkung erzeugt. Durch sinnvolle Steuerung der Bremsaktivität kann eine weitere oder geringere Drehbewegung ausgelöst werden. Figur 19 und 20 zeigen den Schwingkörper mit dem Zahnrad 22 und der Rotationsmasse 10 in zwei unterschiedlichen Stellungen. Man erkennt, dass sowohl die Rotationsachse der Rotationsmasse 10 bewegt ist, als auch die Lage der Rotationsmasse selber.

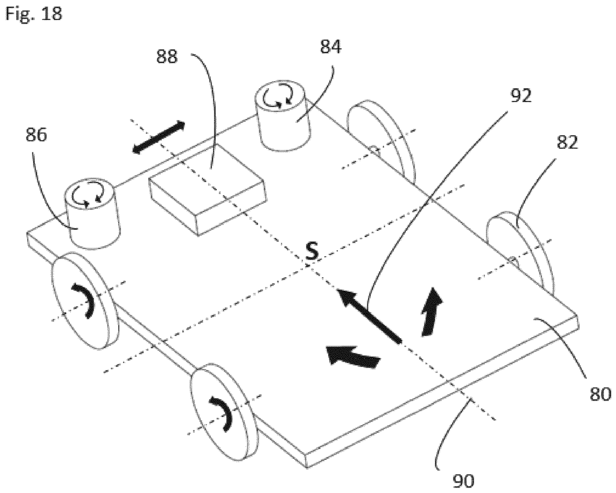

Die Drehung des Gehäuses kann auf vielfältige Weise genutzt werden. Figur 18 ist eine schematische Darstellung eines Fahrzeugs 80 das hier mit Rädern 82 dargestellt ist. Statt eines Fahrzeugs mit Rädern sind aber auch Wasserfahrzeuge oder Flugzeuge etc. denkbar. Das Fahrzeug ist mit zwei Antriebsanordnungen 84 und 86 versehen, die außerhalb des Schwerpunkts S angeordnet sind. Durch Rotation der Antriebsanordnungen 84 und 86 in Richtung der Pfeile kann das Fahrzeug beispielsweise in Richtung des Pfeils 92 entlang der Bewegungsrichtung 90 bewegt werden. Um beispielsweise eine lineare Bewegung zu erreichen, werden die Antriebsanordnungen 84 und 86 in gleicher Weise alternierend mit unterschiedlichem Drehsinn rotiert. Durch Änderung der Drehung, etwa durch geeignete Steuerung mit der Steuereinheit 88 kann das Fahrzeug in eine gewünschte Richtung bewegt werden.

## Patentansprüche

1. Antriebsanordnung, enthaltend:
(a) eine um eine erste Achse drehbeweglich gelagerte Rotationsmasse (10);
(b) einen um eine zweite, senkrecht zur ersten Achse verlaufende Achse (28) drehbeweglich gelagertes Lagerelement (20) mit einem Lager zum Lagern der Rotationsmasse (10),
(c) einen um eine dritte, senkrecht zur zweiten Achse drehbeweglich gelagerten Schwingkörper (36) mit einem Lager (42) zum Lagern des Lagerelements (20),
(d) einen an dem Schwingkörper (36) vorgesehenen Antrieb (46) zum Erzeugen einer Drehbewegung des Lagerelements (20) um die zweite Achse (28), und
(e) ein Gehäuse (52) mit einem Lager zum Lagern des Schwingkörpers (36), **gekennzeichnet durch**
(f) eine gehäusefeste Bremse (60) zum Abbremsen der Drehbewegung des Schwingkörpers (36), derart, dass bei jedem Bremsvorgang ein Drehimpuls auf das Gehäuse (52) übertragen wird.

2. Antriebsanordnung nach Anspruch 1, **dadurch gekennzeichnet, dass** die Rotationsmasse (10), das Lagerelement (20) und/oder der Schwingkörper (36) mit einer Welle (12; 30) verbunden sind, die sich entlang der zugehörigen Rotationsachse erstreckt und drehbeweglich gelagert ist.

3. Antriebsanordnung nach Anspruch 1 oder 2, **dadurch gekennzeichnet, dass** der Antrieb zum Erzeugen einer Drehbewegung des Lagerelements um die zweite Achse umfasst:
(a) ein außenverzahntes Zahnrad (46), welches das Lagerelement (20) an einer Außenverzahnung (22) antreibt;
(b) eine Turbine oder Schaufeln, die mit einem unter Druck stehenden Fluid angetrieben werden; oder
(c) einen Elektromotor mit Magneten und Spulen.

4. Antriebsanordnung nach einem der vorgehenden Ansprüche, **dadurch gekennzeichnet, dass** der Schwingkörper (36) einen Schwingkörperring (38) umfasst, der fest mit einer ringförmigen Bremsscheibe (40) verbunden ist, wobei die Bremse (60) an der Bremsscheibe (40) angreift.

5. Antriebsanordnung nach Anspruch 4, **dadurch gekennzeichnet, dass** der Schwingkörperring (38) in einer Ebene liegt, die senkrecht zur Ebene der Bremsscheibe (40) verläuft.

6. Antriebsanordnung nach einem der vorgehenden Ansprüche, **dadurch gekennzeichnet, dass** das Gehäuse (52) eine offene Kugel oder einen Zylinder bildet.

7. Antriebsanordnung nach einem der vorgehenden Ansprüche, **dadurch gekennzeichnet, dass** die Bremse (60) von einer Wirbelstrombremse oder zwei Bremsklötzen auf der Innenseite des Gehäuses (52) gebildet ist, welche den Schwingkörper (38) zu ausgewählten Phasen abbremsen, wobei eine Antriebskraft auf das Gehäuse (52) übertragen wird.

8. Antriebsanordnung nach einem der vorgehenden Ansprüche, **dadurch gekennzeichnet, dass** ein Motor zum Antreiben der Rotationsmasse (10) vorgesehen ist, der über Schleifkontakte mit Energie versorgt wird.

9. Antriebsanordnung nach einem der vorgehenden Ansprüche, **dadurch gekennzeichnet, dass** die Bremse (60) statt an einem Gehäuse direkt auf einem anzutreibenden oder abzulenkenden Objekt vorgeshen ist.

10. Antriebsanordnung nach einem der vorgehenden Ansprüche, **dadurch gekennzeichnet, dass** auf einem anzutreibenden oder abzulenkenden Objekt eine oder mehrere weitere Antriebsanordnungen nach einem der vorgehenden Ansprüche vorgesehen sind.

11. Antriebsanordnung nach einem der vorgehenden Ansprüche, **dadurch gekennzeichnet, dass** ein oder mehrere Sensoren zur Ermittlung der Winkellage des Lagerelements und/oder des Schwinkörpers vorgesehen sind.

12. Antriebsanordnung nach einem der vorgehenden Ansprüche, **dadurch gekennzeichnet, dass** ein oder mehrere Sensoren zur Ermitlung der Corioliskräfte vorgesehen sind.

13. Verwendung einer Antriebsanordnung nach einem der vorgehenden Ansprüche zum Antrieb und/oder Ablenken einer Bewegung eines Transportmittels für Personen und/oder Güter, im Automotive-Bereich, in der Luft- und Raumfahrt, im nautischen Bereich und/oder für Tiefseeanwendungen.

## Claims

1. Driving assembly comprising:
(a) a rotational mass (10) pivotably supported about a first axis;
(b) a bearing element (20) pivotably supported about a second axis (28) extending perpendicular to the first axis, the bearing element comprising a bearing for bearing the rotational mass (10),
(c) an oscillation body (36) pivotably supported about a third axis extending perpendicular to the second axis, the oscillation body comprising a bearing (42) for bearing the bearing element (20),
(d) a driving device (46) provided at the oscillation body (36) for generating a rotational movement of the bearing element (20) about the second axis (28), and
(e) a housing (52) with a bearing for bearing the oscillation body (36), **characterized by**
(f) a brake (60) fixed to the housing for braking the rotational movement of the oscillation body (36) in such a way that an angular momentum is transferred to the housing (52) with each braking process.

2. Driving assembly according to claim 1, **characterized in that** the rotational mass (10), the bearing element (20) and/or the oscillation body (36) is connected to a shaft (12; 30), extending along the corresponding rotational axis and which is pivotably supported.

3. Driving assembly according to claim 1 or 2, **characterized in that** the driving device for generating a rotational movement of the bearing element about the second axis comprises:
(a) a gear wheel (46) with external teeth driving the bearing element (20) at external teeth (22);
(b) a turbine or blades, driven by pressurized fluid; or
(c) an electro motor with magnets and coils.

4. Driving assembly according to any of the preceding claims, **characterized in that** the oscillation body (36) comprises an oscillation body ring (38) which is fixed to an annular braking disk (40), wherein the brake (60) is engaged to the braking disk (40).

5. Driving assembly according to claim 4, **characterized in that** the oscillation body ring (38) extends in a plane perpendicular to the plane of the braking disk (40).

6. Driving assembly according to any of the preceding claims, **characterized in that** the housing (52) forms an open ball or cylinder.

7. Driving assembly according to any of the preceding claims, **characterized in that** the brake (60) is an eddy current brake or formed by two brake pads on the inside of the housing (52) which brake the oscillation body (38) at selected phases, while the driving force is transferred to the housing (52).

8. Driving assembly according to any of the preceding claims, **characterized in that** a motor is provided for driving the rotational mass (10) which is fed with energy by sliding contacts.

9. Driving assembly according to any of the preceding claims, **characterized in that** the brake (60) is provided directly at one of the driven or deflected objects instead of the housing.

10. Driving assembly according to any of the preceding claims, **characterized in that** one or more driving assemblies according to the preceding claims is provided at a driven or deflected object.

11. Driving assembly according to any of the preceding claims, **characterized in that** one or more sensors are provided to determine the angular position of the bearing element and/or the oscillation body.

12. Driving assembly according to any of the preceding claims, **characterized in that** one or more sensors are provided to determine the Coriolis forces.

13. Use of a driving assembly according to any of the preceding claims for driving and/or deflecting a movement of a transport vehicle for people and/or goods, for automotive applications, for air- and space applications, for nautical applications and/or deep sea applications.

## Revendications

1. Disposition d'entraînement comprenant :
(a) un poids de rotation (10) logé de manière à réaliser un déplacement de rotation autour d'un premier axe ;
(b) un élément de palier (20) logé de manière à réaliser un déplacement de rotation autour d'un deuxième axe (28) s'étendant perpendiculairement au premier axe et muni d'un palier destiné à loger le poids de rotation (10),
(c) un corps oscillant (36) logé de manière à réaliser un déplacement de rotation autour d'un troisième axe perpendiculairement au deuxième axe et muni d'un palier (42) destiné à loger l'élément de palier (20),
(d) un dispositif d'entraînement (46) prévu sur le corps oscillant (36) et destiné à générer un déplacement de rotation de l'élément de palier (20) autour du deuxième axe (28), et
(e) un boîtier (52) muni d'un palier destiné à loger le corps oscillant (36),
**caractérisée par**
(f) un frein (60) fixe par rapport au boîtier et destiné à freiner le déplacement de rotation du corps oscillant (36) de sorte qu'un moment angulaire est transmise au boîtier (52) lors de chaque freinage.

2. Disposition d'entraînement selon la revendication 1 **caractérisée en ce que** le poids de rotation (10), l'élément de palier (20) et/ou le corps oscillant (36) sont reliés à un arbre (12 ; 30) qui s'étire le long de l'axe de rotation associé et est logé de manière à réaliser un déplacement de rotation.

3. Disposition d'entraînement selon la revendication 1 ou 2 **caractérisée en ce que** le dispositif d'entraînement destiné à générer un déplacement de rotation de l'élément de palier autour du deuxième axe comprend :
(a) une roue dentée (46) à denture extérieure qui entraîne l'élément de palier (20) sur une denture extérieure (22) ;
(b) une turbine ou des palettes entraînées par une fluide sous pression ; ou
(c) un moteur électrique muni d'aimants et de bobines.

4. Disposition d'entraînement selon l'une quelconque des revendications précédentes **caractérisée en ce que** le corps oscillant (36) comprend une bague de corps oscillant (38) qui est solidaire à un disque de frein (40) annulaire, le frein (60) mordant sur le disque de frein (40).

5. Disposition d'entraînement selon la revendication 4 **caractérisée en ce que** la bague de corps oscillant (38) se trouve dans un plan s'étendant perpendiculairement au plan du disque de frein (40).

6. Disposition d'entraînement selon l'une quelconque des revendications précédentes **caractérisée en ce que** le boîtier (52) forme une boule ouverte ou un cylindre.

7. Disposition d'entraînement selon l'une quelconque des revendications précédentes **caractérisée en ce que** le frein (60) est formé d'un frein aéraulique ou de deux freins à sabot situé(s) sur la face intérieure du boîtier (52) et freinant le corps oscillant (38) au cours de phases sélectionnées, une force d'entraînement étant transmise au boîtier (52).

8. Disposition d'entraînement selon l'une quelconque des revendications précédentes **caractérisée en ce qu**'il est prévu un moteur destiné à entraîner le poids de rotation (10) et alimenté en énergie par contact par frottement.

9. Disposition d'entraînement selon l'une quelconque des revendications précédentes **caractérisée en ce que** le frein (60) est prévu directement sur un objet à entraîner ou à dévier au lieu d'être prévu sur un boîtier.

10. Disposition d'entraînement selon l'une quelconque des revendications précédentes **caractérisée en ce que,** selon l'une quelconque des revendications précédentes, une ou des dispositions d'entraînement supplémentaires sont prévues sur un objet à entraîner ou à dévier.

11. Disposition d'entraînement selon l'une quelconque des revendications précédentes **caractérisée en ce qu'**un ou plusieurs capteurs sont prévus pour déterminer la position angulaire de l'élément de palier et/ou du corps oscillant.

12. Disposition d'entraînement selon l'une quelconque des revendications précédentes **caractérisée en ce qu'**un ou plusieurs capteurs sont prévus pour déterminer les forces de Coriolis.

13. Utilisation d'une disposition d'entraînement, selon l'une quelconque des revendications précédentes, destinée à entraîner et/ou à dévier un déplacement d'un moyen de transport pour personnes et/ou marchandises dans le domaine de l'automobile, de l'aviation et de l'aéronautique, du nautisme et/ou pour des applications dans les grands fonds marins.
